(19) **Europäisches Patentamt European Patent Office Office européen des brevets**

(11) **EP 2 221 601 B1**

(12) **EUROPEAN PATENT SPECIFICATION**

(45) Date of publication and mention of the grant of the patent:
**24.06.2015 Bulletin 2015/26**

(51) Int Cl.:
***G01N 17/02*** *(2006.01)*     ***G01N 27/26*** *(2006.01)*

(21) Application number: **10001668.2**

(22) Date of filing: **18.02.2010**

(54) **Pitting corrosion diagnostic method and apparatus for stainless steel and for seawater pump using stainless steel as a structural member**

Lochkorrosionsdiagnoseverfahren und -vorrichtung für Edelstahl und für eine Meerwasserpumpe, die Edelstahl als Bauelement einsetzt

Procédé et appareil de diagnostic de corrosion localisée pour acier inoxydable et pompe d'eau de mer utilisant l'acier inoxydable en tant qu'élément structurel

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.02.2009 JP 2009040095**

(43) Date of publication of application:
**25.08.2010 Bulletin 2010/34**

(73) Proprietor: **Hitachi, Ltd.**
**Chiyoda-ku**
**Tokyo (JP)**

(72) Inventors:
• **Ohashi, Kenya**
**Tokyo 100-8220 (JP)**
• **Hira, Yasuo**
**Tokyo 100-8220 (JP)**
• **Fujii, Kazumi**
**Tokyo 100-8220 (JP)**
• **Chiba, Yoshimasa**
**Tokyo 170-8466 (JP)**

(74) Representative: **Strehl Schübel-Hopf & Partner**
**Maximilianstrasse 54**
**80538 München (DE)**

(56) References cited:
**JP-A- 5 215 707**     **JP-A- 2003 329 632**

## Description

BACKGROUND OF THE INVENTION

(Field of the Invention)

The present invention relates to a pitting corrosion diagnostic method for stainless steel and a pitting corrosion diagnostic apparatus for stainless steel, such as for a seawater pump using stainless steel as a structural member.

(Description of Related Art)

Conventionally, when using stainless steel as a base metal of a structural member of a device, for example, a seawater pump, in an environment of easy pitting corrosion initiation such as in seawater, as a countermeasure for suppressing pitting corrosion initiation in the stainless steel composing the member of the device, one of the following four methods is mainly used.

(1) Electric corrosion-proof

This is a stainless steel corrosion-proof method for connecting a power source having a voltage for supplying electrons to the stainless steel and adjusting the voltage of the power source so as to control the potential of the stainless steel to the cathode side.

The corrosion of the stainless steel progresses by discharging positive ions of the metal into the solution environment with electrons left on the metal side, so that the method injects extra electrons into the stainless steel, thereby suppressing the ionization of the metal.

(2) Sacrificial anode

This is a stainless steel corrosion-proof method for controlling, similarly to the electric corrosion-proof, the movement of electrons in the corrosion operation.

The method permits a metal at a potential lower than that of stainless steel to make contact with the stainless steel used as a structural member of a device which is a corrosion-proof object, so that a less noble metal elutes metallic ions so that it obtains a potential similar to that of the stainless steel in a solution environment and transfers electrons to the stainless steel side. And, at that time, the stainless steel moves the potential to the cathode reduced in the anode dissolution reaction upon receipt of electron supply, thus the anode corrosion reaction is suppressed. As a less noble metal making contact with the stainless steel, carbon steel, aluminum, and zinc may be cited.

Further, there are possibilities that the constituent member may be corroded, so that in an impeller which is a structural member of a seawater pump which is a corrosion-proof object, carbon steel which is a less noble metal having a large area is permitted to make contact with the stainless steel, thus the corrosion of the stainless steel can be suppressed.

In Japanese Patent Laid-Open No. 2006-291724, an art of using a contact terminal for conducting a less noble casing material and a noble impeller to each other as a seawater pump corrosion-proof method, thereby suppressing the corrosion of the impeller material is disclosed.

(3) Surface coating

This is a method for coating an organic film or an inorganic film on the surface of the stainless steel so as to prevent arrival of a corrosive environmental factor such as chlorine ions, thereby suppressing the corrosion, using resin paint, chemical conversion coating, or plating.

(4) High corrosion resistant material

This method uses a metal having the metallic composition capable of opposing the corrosiveness of the solution environment.

In the stainless steel, a metal that if the Cr component is increased, the Mo component and the rate of N are increased is effective in the pitting corrosion and gap corrosion in a corrosion environment such as seawater.

Further, regarding the pitting corrosion of the stainless steel, in the method for deciding pitting corrosion initiation, it is known to measure the corrosion potential and pitting potential and then decide pitting corrosion initiation.

For example, in Japanese Patent Laid-Open No. 2003-329632, an art of diagnosing the case that for the known pitting potential, the effective natural potential (corrosion potential) at the time of measurement becomes low as progress of the pitting corrosion is disclosed.

Further, in Japanese Patent Laid-Open No. Hei 10(1998)-170469, a method for calculating the pitting depth from the measurement of a corrosion current by a probe is described.

Here, the necessary conditions of a constituent member applicable to current measurement are that a probe installed in the structural member to be measured is not insulated and the probe and the pitting corrosion initiation portion of the structural member are close to each other, and if it is difficult from the viewpoint of space to install the probe on the structural member, the measurement is difficult.

Namely, if the portion of the structural member where the probe is installed includes insulation and changes in the electric resistance of the metal body, the current is reduced apparently in value and even when a corrosion current is generated due to pitting corrosion, the current is reduced due to a current loss owing to the resistance or current interruption by the insulator and it is difficult to measure accurately the pitting depth.

JP 5 215 707 A discloses a method for calculating the pitting depth in steel by measuring the anode current for the steel in use, and comparing it with a pitting model containing resistance constants experimentally determined before-hand.

Patent Document 1: Japanese Patent Laid-Open No. 2006-291724
Patent Document 2: Japanese Patent Laid-Open No. 2003-329632
Patent Document 3: Japanese Patent Laid-Open No. Hei 10(1998)-170469
Patent document 4: Japanese Patent laid-open publication number 05-215707

SUMMARY OF THE INVENTION

However, the prior art aforementioned, regarding the pitting corrosion initiation and progress of stainless steel to be measured, does not provide an art to predict the pitting corrosion initiation and progress.

When using stainless steel as a structural member of a device in a solution environment where pitting corrosion progresses, the diagnosis of the pitting corrosion progress by preselection of the material and the brief pitting corrosion monitoring art are important for the pitting corrosion diagnosis of the stainless steel.

An object of the present invention is to provide a stainless steel pitting corrosion diagnostic method capable of predicting and diagnosing the progress of pitting corrosion generated in stainless steel to be measured and a stainless steel pitting corrosion diagnostic apparatus.

This object is solved by the method of claim 1 and the apparatus of claim 2.

A stainless steel pitting corrosion diagnostic method of the present invention comprises the steps of:

measuring beforehand the potential difference between the corrosion-proof potential and the pitting potential, a pitting depth, and elapsed time required for reaching the pitting depth for stainless steel having the same material as that of the stainless steel to be measured and

preserving a mutual relation thereof as measured data, and measuring the potential difference between the corrosion-proof potential and the pitting potential for the stainless steel to be measured, comparing the measured potential difference with said mutual relation between the potential difference between the corrosion-proof potential and the pitting potential of the measured data preserved, the pitting depth, and the elapsed time required for reaching the pitting depth, and calculating from the comparison the pitting depth generated after the predetermined elapsed time in the stainless steel to be measured, thereby predicting the pitting corrosion progress generated in the stainless steel.

A stainless steel pitting corrosion diagnostic apparatus of the present invention comprises:

a potentiostat structured so as to measure a corrosion potential at which a potential of stainless steel to be measured is set for a reference electrode, and a current between a counter electrode at the potential and a sample electrode is detected, and an anode current and a cathode current become equal to each other, and an apparent current becomes 0 and to measure the pitting potential at which the current increases rapidly at anode polarization,
a probe structured so as to include a container for forming a water contact region on the surface of the stainless steel to be measured, a sample electrode to be connected to an electrode terminal of the potentiostat for realizing electric conduction with the stainless steel and to be arranged in the container, a reference electrode to be connected to the electrode terminal of the potentiostat and to be arranged in the container, and a counter electrode to be connected to the electrode terminal of the potentiostat and to be arranged in the container,
a power source for supplying power to the potentiostat, and an operational device including a storage device of measured data for measuring beforehand the potential difference between the corrosion-proof potential and the pitting potential, the pitting depth, and the elapsed time required for reaching the pitting depth for stainless steel having the same material as that of the stainless steel to be measured and preserving a mutual relation thereof as measured data, for measuring the potential difference between the corrosion-proof potential and the pitting potential for the stainless steel to be measured by the probe and potentiostat, comparing the measured potential difference with the mutual relation between the potential difference between the corrosion-proof potential and the pitting potential of the measured data preserved, the pitting depth, and the elapsed time required for reaching the pitting depth, and calculating from the comparison the pitting depth generated after the elapsed time in the stainless steel to be measured, thereby predicting pitting corrosion progress generated in the stainless steel.

A stainless steel pitting corrosion diagnostic apparatus of an embodiment of the present invention comprises:

a potentiostat structured so as to measure a corrosion potential at which a potential of stainless steel to be measured is set for a reference electrode, and a current between a counter electrode at the potential and a sample electrode is detected, and an anode current and a cathode current become equal to each other, and an apparent current becomes 0 and a pitting potential at which the current increases rapidly at anode polarization,

a probe structured so as to include a container for forming a water contact region on the surface of the stainless steel to be measured, a sample electrode to be connected to an electrode terminal of the potentiostat for realizing electric conduction with the stainless steel and to be arranged so as to make contact with the stainless steel, a reference electrode to be connected to the electrode terminal of the potentiostat and to be arranged in the container, and a counter electrode to be connected to the electrode terminal of the potentiostat and to be arranged in the container,

a power source for supplying power to the potentiostat, and an operational device including a storage device of measured data for measuring beforehand a potential difference between a corrosion-proof potential and the pitting potential, a pitting depth, and elapsed time required for reaching the pitting depth for stainless steel having a same material as that of the stainless steel to be measured and preserving a mutual relation thereof as measured data, for measuring the potential difference between the corrosion-proof potential and the pitting potential for the stainless steel to be measured by the probe and the potentiostat, comparing the measured potential difference with the mutual relation between the potential difference between the corrosion-proof potential and the pitting potential of the measured data preserved, the pitting depth, and the elapsed time required for reaching the pitting depth, calculating the pitting depth after the elapsed time generated in the stainless steel to be measured, thereby predicting pitting corrosion progress generated in the stainless steel.

An embodiment of the invention is a pitting corrosion diagnostic method for a seawater pump using stainless steel as a structural member, comprising the steps of:

measuring beforehand a potential difference between a corrosion-proof potential and a pitting potential, a pitting depth, and elapsed time required for reaching the pitting depth for stainless steel having a same material as that of the stainless steel to be measured, preserving a mutual relation thereof as measured data, and

measuring the potential difference between the corrosion-proof potential and the pitting potential for the stainless steel to be measured, comparing the measured potential difference with a mutual relation between the potential difference between the corrosion-proof potential and the pitting potential of the measured data preserved, the pitting depth, and the elapsed time required for reaching the pitting depth, calculating the pitting depth after the elapsed time generated in the stainless steel to be measured, thereby predicting pitting corrosion progress generated in the stainless steel.

An embodiment of the invention is a pitting corrosion diagnostic apparatus for a seawater pump using stainless steel as a structural member, comprising:

a potentiostat structured so as to measure a corrosion potential at which a potential of stainless steel of a structural member to be measured composing a seawater pump is set for a reference electrode, and a current between a counter electrode at the potential and a sample electrode is detected, and an anode current and a cathode current become equal to each other, and an apparent current becomes 0 and a pitting potential at which the current increases rapidly at anode polarization,

a probe structured so as to include a container for forming a water contact region on a surface of the stainless steel to be measured, a sample electrode to be connected to an electrode terminal of the potentiostat for realizing electric conduction with the stainless steel and to be arranged in the container, a reference electrode to be connected to the electrode terminal of the potentiostat and to be arranged in the container, and a counter electrode to be connected to the electrode terminal of the potentiostat and to be arranged in the container or arranged so as to make contact with the stainless steel,

a power source for supplying power to the potentiostat, and an operational device including a storage device of measured data for measuring beforehand a potential difference between the corrosion-proof potential and a pitting potential, a pitting depth, and elapsed time required for reaching the pitting depth for stainless steel having a same material as that of the stainless steel to be measured and preserving a mutual relation thereof as measured data, for measuring the potential difference between the corrosion-proof potential and the pitting potential for the stainless steel to be measured by the probe and the potentiostat, comparing the measured potential difference with a mutual relation between the potential difference between the corrosion-proof potential and the pitting potential of the measured data preserved, the pitting depth, and the elapsed time required for reaching the pitting depth, calculating the pitting depth after the elapsed time generated in the stainless steel to be measured, thereby predicting pitting corrosion progress generated in the stainless steel.

According to the present invention, a stainless steel pitting corrosion diagnostic method capable of predicting and diagnosing progress of pitting corrosion generated in stainless steel to be measured and a stainless steel pitting corrosion diagnostic apparatus can be realized.

Further, according to an embodiment of the present invention, a seawater pump pitting corrosion diagnostic method using stainless steel capable of diagnosing pitting corrosion progress generated in the stainless steel to be measured, thereby obtaining highly reliable maintenance information as a structural member and a seawater pump pitting corrosion diagnostic apparatus using the stainless steel as a structural member.

BRIEF DESCRIPTION OF THE DRAWINGS

Fig. 1 is a characteristic diagram of the measured results showing the relation between the potential difference between the corrosion potential and the pitting potential for the stainless steel to be measured relating to the present invention and the pitting depth generated in the stainless steel.

Fig. 2 is a characteristic diagram of the measured results showing the relation between the potential difference between the corrosion potential and the pitting potential for the stainless steel to be measured relating to the present invention, the pitting depth generated in the stainless steel, and the elapsed time of measurement.

Fig. 3 is a schematic view of the potentiometer of the stainless steel which is an embodiment of the present invention.

Fig. 4 is a schematic view of the potentiometer of the stainless steel relating to the embodiment of the present invention shown in Fig. 3 which is expressed in an electric circuit.

Fig. 5 is a schematic view of the potentiometer of the stainless steel which is another embodiment of the present invention.

Fig. 6 is a schematic view showing the seawater pump pitting corrosion diagnostic apparatus using the stainless steel which is an embodiment of the present invention as a structural member.

Fig. 7 is a schematic view showing the seawater pump pitting corrosion diagnostic apparatus using the stainless steel which is another embodiment of the present invention as a structural member.

DETAILED DESCRIPTION OF THE INVENTION

Next, the stainless steel pitting corrosion diagnostic method which is an embodiment of the present invention, the stainless steel pitting corrosion diagnostic apparatus, the seawater pump pitting corrosion diagnostic method using the stainless steel as a structural member, and the seawater pump pitting corrosion diagnostic apparatus using the stainless steel as a structural member will be explained below with reference to the accompanying drawings.

[Embodiment 1]

The stainless steel pitting corrosion diagnostic method and the stainless steel pitting corrosion diagnostic apparatus which are an embodiment of the present invention will be explained. Prior to the explanation of this embodiment, the relation between the pitting depth expressing the progress speed of pitting corrosion generated in the stainless steel and the corrosion potential of the stainless steel, that is, between the natural potential in the immersed environment and the pitting potential will be explained.

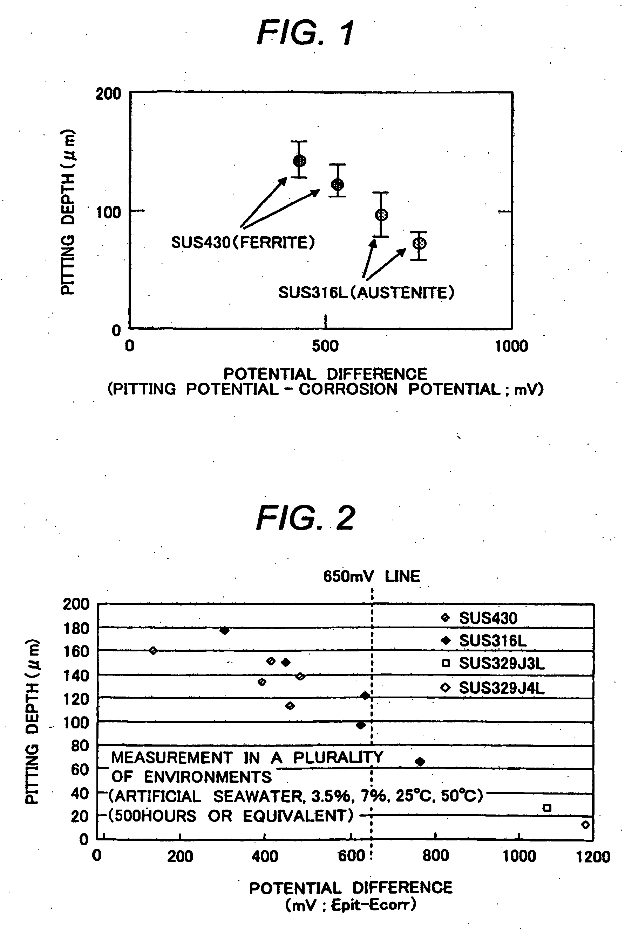

Fig. 1 shows the measured results obtained under the condition that, in the stainless steel pitting corrosion diagnostic apparatus of this embodiment and the seawater pump pitting corrosion diagnostic apparatus using stainless steel as a structural member, in an environment that stainless steel SUS430 having the ferrite phase to be measured and stainless steel SUS316L having the austenite phase are immersed in artificial seawater, the potential difference (mV) which is a difference between the pitting potential and the corrosion potential measured in two cases of 50°C and 25°C of the artificial seawater temperature is put in the axis of abscissa and the pitting depth ($\mu$m) for the potential difference (mV) is put in the axis of ordinates.

In Fig. 1, the potential difference and pitting depth are measured in the two cases of 50°C and 25°C of the artificial seawater temperature in the stainless steel immersed environment and for SUS430 and SUS316L, the left indicates the measured value at 50°C of the artificial seawater temperature and the right indicates the measured value at 25°C of the artificial seawater temperature.

The measured results shown in Fig. 1 show that as the potential difference which is a difference between the pitting potential and the corrosion potential measured in the axis of abscissa increases, the pitting depth in the axis of ordinates becomes shallow. Further, it is found that as the artificial seawater temperature goes down, the pitting depth becomes shallow.

Therefore, the potential difference which is a difference between the pitting potential and the corrosion potential is measured and the measured value of the potential difference is brought into correspondence to the relation between the potential difference which is a difference between the pitting potential and the corrosion potential which are shown in Fig. 2 and will be described later, the pitting depth, and the measurement elapsed time required for reaching a premeasured pitting depth, thus the pitting corrosion progress for the stainless steel to be measured can be predicted.

Next, the state that the relation between the pitting depth indicating the pitting progress speed generated in the stainless steel which is the measured data preserved in the storage device of the measured data which is installed in the operational device of the stainless steel pitting corrosion diagnostic apparatus of this embodiment and the potential difference between the stainless steel corrosion potential, that is, the stainless steel corrosion potential in a plurality of environments in which the stainless steel is immersed, that is, in the artificial seawater under the condition of 3.5% and 7% of the salt content concentration and 25°C and 50°C of the temperature and the pitting potential is measured after a lapse of 500 hours will be explained by referring to Fig. 2.

Fig. 2, regarding stainless steel SUS430 having the ferrite phase to be measured by the stainless steel pitting corrosion diagnostic apparatus of this embodiment, stainless steel SUD316L having the austenite phase, and 2-phase stainless steel SUS329J3L and SUS329J4L having the two phases aforementioned, shows respectively the relation of the pitting depth ($\mu$m) for the potential difference (mV) which is a difference between the pitting potential and the corrosion potential in various environments that the concentration and temperature of artificial seawater are adjusted to the aforementioned values.

The measurement of the potential for the stainless steel to be measured by the stainless steel pitting corrosion diagnostic apparatus of this embodiment uses a relative value to a silver/silver chloride reference electrode. The pitting depth is measured, after observing the sample surface after the stainless steel is anode-polarized up to 1V by an optical microscope, by a difference in the depth of field which is a difference between the focusing position of the surface and the focusing position of the pitting bottom.

The measured results shown in Figs. 1 and 2 show that as the potential difference which is a difference between the pitting potential and the corrosion potential increases, the pitting depth decreases.

And, in the two stainless steels having the austenite phase and stellite phase and 2-phase stainless steel having the two phases, it is found that as the potential difference which is a difference between the pitting potential and the corrosion potential increases, the pitting depth decreases.

As understandable from the above explanation, for the stainless steel to be measured, the pitting potential and corrosion potential are measured and the potential difference which is a difference between them is compared with the relation between the potential difference between the pitting potential and the corrosion potential which are measured values after a lapse of 500 hours and the pitting depth, thus regarding the damage of the stainless steel due to a phenomenon that after pit initiation, the pitting corrosion is enlarged in the depth direction, the progress degree of the pitting corrosion in the depth direction depending on a difference in the stainless steel kind can be predicted, calculated, and diagnosed.

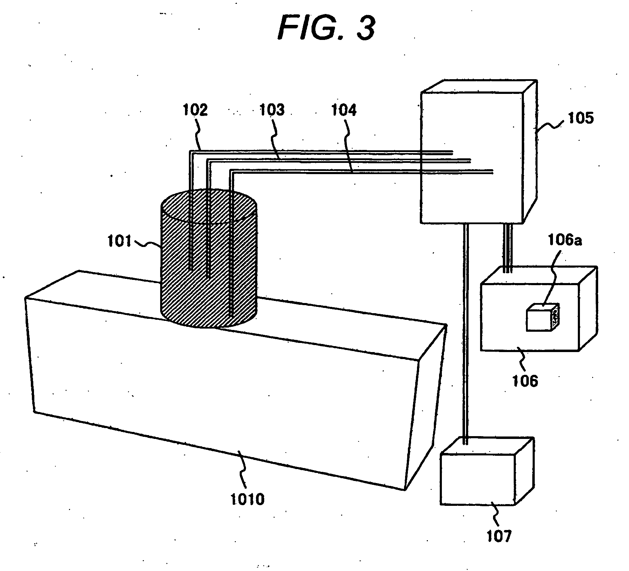

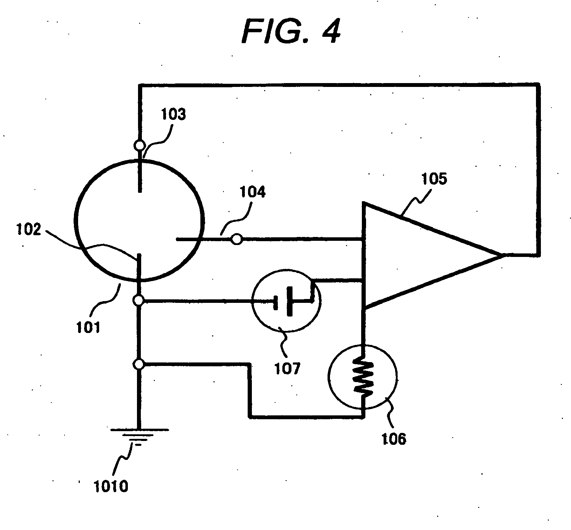

Next, the stainless steel pitting corrosion diagnostic apparatus relating to the embodiment of the present invention will be explained. Fig. 3 is a schematic view of the pitting corrosion diagnostic apparatus relating to the embodiment of the present invention for measuring the potential of the stainless steel to be measured and Fig. 4 is a schematic view of the stainless steel pitting corrosion diagnostic apparatus relating to the embodiment of the present invention shown in Fig. 3 which is expressed in an electric circuit.

In the pitting corrosion diagnostic apparatus shown in Figs. 3 and 4, a probe composed of a potential measuring container 101 which is arranged in contact with stainless steel 1010 to be measured and forms a water contact region, a sample electrode 104 which is connected to the electrode terminal of a potentiostat 105, which will be described later, for realizing electric conduction to the stainless steel and is arranged in the container 101, a reference electrode 102 which is connected to the electrode terminal of the potentiostat 105 and is arranged in the container 101, and a counter electrode 103 which is connected to the electrode terminal of the potentiostat 105 and is arranged in the container 101 is installed.

The reference electrode 102, the counter electrode 103, and the sample electrode 104 composing the probe are connected respectively to the potentiostat 105 for enabling potential control and current measurement and the potentiostat 105 is connected to a power source 107 to be supplied with power. Furthermore, the potentiostat 105 is connected to an operational device 106 including a measured data storage device 106a for preserving premeasured data.

The potentiostat 105 sets the potential of the stainless steel 1010 to be measured for the reference electrode 102, measures the current between the counter electrode 103 at the concerned potential and the sample electrode 104, thereby the corrosion potential at which the anode current and cathode current become equal to each other and the apparent current becomes 0 and the pitting potential at which the current increases rapidly at the anode polarization.

The potentiostat 105 is composed of the power source 107 and measuring instrument which are combined to measure the current density when permitting the potential to scan, and as shown in Fig. 4, has a function of an operational amplifier supplied with power from the power source 107, and is structured so that the electrode terminal arranged in the potentiostat 105 is electrically connected to the electric conductor container 101 which is a load body of a feedback loop wherein the sample electrode, reference electrode, and counter electrode composing the probe are arranged.

And, if the potentiostat 105 is operated so as to set the potential of the sample electrode 104 for the reference electrode 102 of the probe, the current between the reference electrode 102 and the sample electrode 104 which should flow in correspondence to the potential is interrupted, though the set potential is kept unchanged.

The current between the reference electrode 102 and the sample electrode 104 which should flow becomes a current flowing between the counter electrode 103 and the sample electrode 104 by the operation of the operational amplifier owned by the potentiostat 105 and is measured.

Here, the current flowing between the counter electrode 103 and the sample electrode 104 at the set potential is the total of the cathode reaction current (the cathode current flowing from the sample electrode 104 to the counter electrode 103, that is, the electron consumption reaction current at the sample electrode 104) and the anode reaction current (the anode current flowing from the counter electrode 103 to the sample electrode 104, that is, the electron generation current by electron generation due to the anode reaction of the sample material at the sample electrode 104) and at the potential in the cathode region, a negative current is measured in the minus region and at the potential in the anode region, a positive current is measured in the plus region.

On the basis of the measuring method, the corrosion potential and pitting potential for the stainless steel to be measured are measured. Namely, the potentiostat 105 is operated so as to permit the potential which is the potential of the sample electrode 104 for the reference electrode 102 to scan on the plus side and the potential at which the current flowing between the sample electrode 104 and the counter electrode 103 becomes 0 is identified first.

The potential at which the current flowing between the sample electrode 104 and the counter electrode 103 becomes 0 is a potential which is specified as a corrosion potential and also a potential depending on the immersion environment (seawater properties, etc.) in which the sample electrode 104 indicating that the anode current and the cathode current are balanced and the stainless steel to be measured are immersed.

Next, the potentiostat 105 is operated furthermore to permit the potential to scan on the plus side and the potential when the current density of the anode current flowing between the sample electrode 104 and the counter electrode 103 exceeds 100 mA/cm² is recorded.

The potential when the current density of the anode current flowing between the sample electrode 104 and the counter electrode 103 exceeds 100 mA/cm² is the potential that is specified as a pitting potential.

In the aforementioned potential measurement, the reference electrode 102 uses a silver/silver chloride electrode, and the potential scanning speed is set at 20 mV/min, and the scanning potential range is from the corrosion potential measured and obtained to +1 v for the reference electrode 102.

By use of the stainless steel pitting corrosion diagnostic apparatus having the aforementioned constitution, the corrosion potential and pitting potential of the stainless steel 1010 to be measured can be obtained, so that by calculation of the operational device 106 arranged in the pitting corrosion diagnostic apparatus, the progress of the pitting depth generated in the stainless steel 1010 can be predicted.

Namely, the corrosion potential and pitting potential of the stainless steel 1010 to be measured are measured by the operational device 106 connected to the potentiostat 105 of the pitting corrosion diagnostic apparatus, and the potential difference which is a difference between them is measured, and the measured potential difference is compared with the mutual relation between the potential difference between the corrosion-proof potential and the pitting potential of the premeasured data which are preserved in the measured data storage device 106a installed in the operational device 106, the pitting depth, and the measured data of the elapsed time required for reaching the pitting depth, and the pitting depth after the predetermined elapsed time generated in the stainless steel to be measured is calculated, thus the pitting depth progress can be predicted.

To predict the pitting depth progress generated in the stainless steel 1010 to be measured, the operational device 106 composing the pitting corrosion diagnostic apparatus of this embodiment includes a functional device for specifying the relation between the potential difference which is a difference between the corrosion potential and the pitting potential of stainless steel made of the same material as that of the stainless steel 1010 and the pitting depth generated in the stainless steel by the following Formula (1).

$$D = A1 + A2/S \text{ --- (1)}$$

where D indicates a pitting depth ($\mu$m), A1 a section constant, A2 an inclination constant, and S a potential difference (mV) which is a difference between the corrosion potential and the pitting potential and the relation between the potential difference which is a difference between the pitting potential and the corrosion potential, the pitting depth, and the premeasured elapsed time (500 hours) required for reaching the pitting depth which are shown in Fig. 2 is simulated by the functional formula.

It is found that the pitting depth shown in Fig. 2 is equivalent to that when the stainless steel is immersed in seawater under the condition of 25°C of air saturation from the consistency with the measured data.

Therefore, if the relation between the pitting depth generated in the stainless steel 1010 to be measured and the elapsed time is supposed to be a linearity, the pitting depth progress generated in the stainless steel 1010 can be predicted by calculation.

In the general environment, between the pitting depth and the elapsed time, the linearity is held, so that in the operational device 106, a functional device for calculating Formula (1) is installed, and the potentiostat 105 is operated to obtain the potential difference (mV) which is a difference between the corrosion potential and the pitting potential by measurement, and the potential difference is substituted in the functional device of the operational device 106, and then Formula (1) is calculated, thus the pitting depth D ($\mu$m) is obtained.

Next, the potential difference between the corrosion potential and the pitting potential measured for the stainless steel 1010 to be measured is compared with the mutual relation between the potential difference between the corrosion-proof potential and the pitting potential of the measured data which are preserved in the measured data storage device 106a which is installed in the operational device 106 and preserves the premeasured data, the pitting depth, and the measured data of the elapsed time required for reaching the pitting depth, and the pitting depth after the predetermined elapsed time generated in the stainless steel is calculated by the operational device 106, thus the pitting depth progress can be predicted.

According to this embodiment of the present invention, the stainless steel pitting corrosion diagnostic method and stainless steel pitting corrosion diagnostic apparatus for enabling diagnosis by predicting the pitting progress generated in the stainless steel to be measured can be realized.

[Embodiment 2]

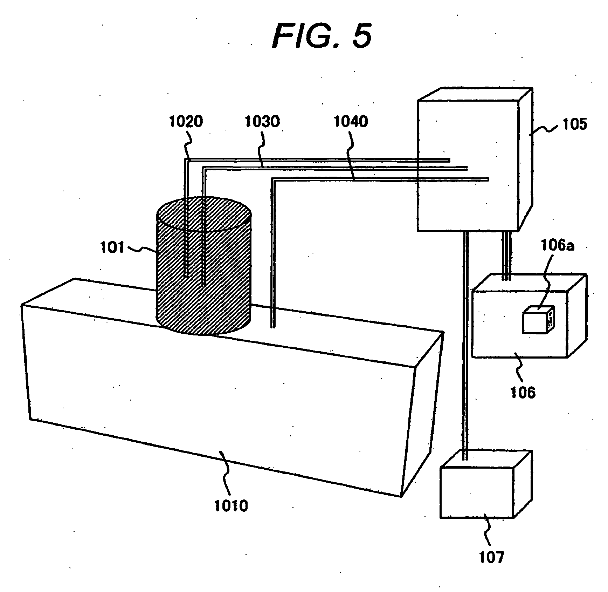

Next, the stainless steel pitting corrosion diagnostic method and the stainless steel pitting corrosion diagnostic apparatus which are another embodiment of the present invention will be explained. Fig. 5 is a schematic view of the stainless steel potentiometer which is another embodiment of the present invention.

The potentiometer of this embodiment has an almost similar basic constitution to that of the potentiometer of the preceding embodiment shown in Fig. 3, so that the explanation of the common constitution of both embodiments is omitted and only the different constitution will be explained below.

In the stainless steel pitting corrosion diagnostic apparatus of this embodiment shown in Fig. 5, the respect that for the stainless steel 1010 to be measured, a sample electrode 1040 is directly installed on the surface of the stainless steel outside the potential measuring container 101 for forming a water contact region internally holding a solution is different from the preceding embodiment.

And, in the potentiostat 105, similarly to the preceding embodiment, the potential of the stainless steel 1010 to be measured is set for the reference electrode 102, and the current at the concerned potential flowing between the counter electrode 103 and the sample electrode 104 is measured, thus the corrosion potential at which the anode current and cathode current become equal to each other and the apparent current becomes 0 and the pitting potential at which the current increases rapidly at the anode polarization are measured.

And, although the explanation is omitted due to duplication, by calculation of the operational device 106 installed in the stainless steel pitting corrosion diagnostic apparatus of this embodiment, the potential difference between the corrosion potential and the pitting potential which are measured for the stainless steel 1010 is compared with the mutual relation between the potential difference between the corrosion-proof potential and the pitting potential of the premeasured data which are preserved in the measured data storage device 106a which is installed in the operational device 106, the pitting depth, and the measured data of the elapsed time required for reaching the pitting depth, and the pitting depth after the predetermined elapsed time generated in the stainless steel is calculated, thus the pitting depth progress can be predicted.

Further, in the stainless steel pitting corrosion diagnostic apparatus of this embodiment, the sample electrode 1040 composing the probe is installed directly on the surface of the stainless steel 1010, and no dimensional limit of the container 101 is placed on it, so that there is an advantage that the sample electrode 1040 can be installed simply.

According to this embodiment, the stainless steel pitting corrosion diagnostic method and stainless steel pitting corrosion diagnostic apparatus for enabling diagnosis by predicting the pitting progress generated in the stainless steel to be measured can be realized.

[Embodiment 3]

Next, a seawater pump pitting corrosion diagnostic apparatus using stainless steel which is an embodiment that the stainless steel pitting corrosion diagnostic art of the present invention is applied to the pitting corrosion diagnosis of the structural member of the seawater pump as a structural member and a seawater pump pitting corrosion diagnostic method using the stainless steel as a structural member will be explained.

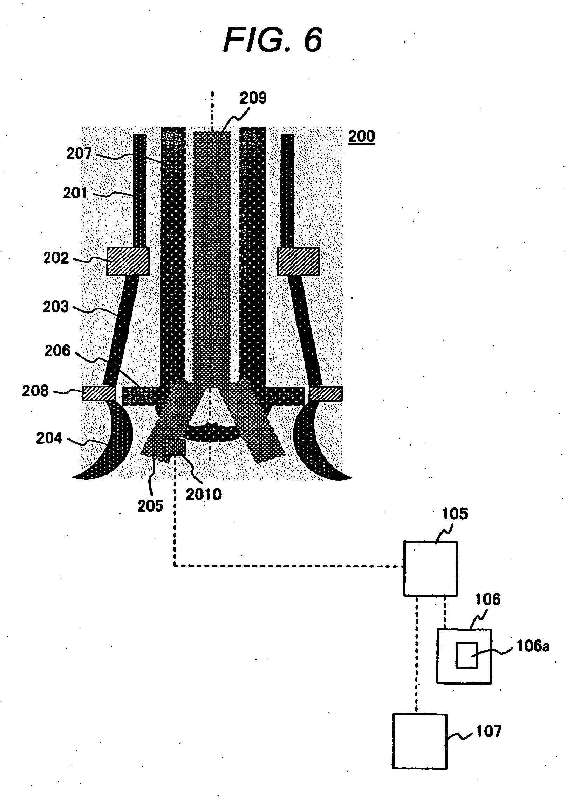

Fig. 6 is a schematic view showing the section of the seawater pump including the pitting corrosion diagnostic apparatus of the seawater pump using the stainless steel that is an embodiment of the present invention as a structural member.

In Fig. 6, a seawater pump 200 is composed of a column pipe 201, a casing liner 203, and a bellmouth casing 204 as main members which are installed on the outer peripheral side of the seawater pump 200, and the column pipe 201 and the casing liner 203 are mutually connected with a flange 202, and the casing liner 203 and the bellmouth casing 204 are mutually connected with a flange 208.

And, on the shaft center side of the seawater pump inside the column pipe 201, the casing liner 203, and the bellmouth casing 204, a rotary shaft 209 is arranged and on the leading edge side of the rotary shaft 209, an impeller 205 is installed.

Further, inside the column pipe 201, the casing liner 203, and the bellmouth casing 204 and on the outer peripheral side of the rotary shaft 209, a conductor 207 is arranged and on the leading edge side of the conductor 207, a guide blade 206 is installed. In the seawater pump 200, the parts aforementioned are all manufactured with steel materials.

The seawater pump 200 is used in the state that it is always immersed in seawater, so that the main members of the seawater pump particularly requiring the pitting corrosion resistance are the impeller 205 and the guide blade 206, therefore the impeller 205 and the guide blade 206 are manufactured with stainless steel having an excellent pitting corrosion resistance to seawater.

Therefore, the seawater pump 200 of this embodiment uses a constitution that the impeller 205 is equipped with a potential measuring sensor 2010, and the potential of the impeller 205 of the stainless steel is measured, thus the pitting progress is diagnosed.

If the potential measuring sensor 2010 is installed, the corrosion potential and pitting potential of the stainless steel impeller 205 which is a structural member composing the seawater pump 200 in use can be monitored and the potential difference between the corrosion potential and the pitting potential measured for the impeller 205, similarly to the stainless steel pitting corrosion diagnostic apparatus of the preceding embodiment shown in Figs. 3 and 5, is compared with the mutual relation between the potential difference between the corrosion-proof potential and the pitting potential of the premeasured data which are preserved in the measured data storage device 106a which is installed in the operational device 106, the pitting depth, and the measured data of the elapsed time required for reaching the pitting depth, and the pitting depth after the predetermined elapsed time generated in the stainless steel is calculated, thus the pitting depth progress generated in the impeller 205 can be predicted.

Namely, in the seawater pump 200 of this embodiment, the potentiometer of the embodiment shown in Fig. 3 is installed in the impeller 205 of the main member of the seawater pump 200 as the potential measuring sensor 2010, thus the corrosion resistance of the main members of the seawater pump 200 can be diagnosed.

And, an inter-triode current is measured for the impeller 205 of the main member to be measured of the seawater pump 205 for the sample electrode 104, thus the anode polarization behavior of the member can be diagnosed, and the corrosion potential and pitting potential for the main members of the seawater pump 200 are measured, thereby the corrosion resistance can be evaluated.

Here, the potential measuring sensor 2010 which is a probe installed on the stainless steel impeller 205 of the main member of the seawater pump 200 of this embodiment is composed of the following devices and just corresponds to the potentiometer shown in Fig. 3.

The correspondence relation between the potential measuring sensor 2010 which is a probe and the constitution of the pitting corrosion diagnostic apparatus shown in Fig. 3 will be explained. The stainless steel 1010 of the pitting corrosion diagnostic apparatus shown in Fig. 3 corresponds to the stainless steel impeller 205 of the seawater pump 200 shown in Fig. 6 and the container 101 holding a potential measuring solution of the pitting corrosion diagnostic apparatus corresponds to the cabinet of the potential measuring sensor 2010.

The reference electrode 102 and counter electrode 103 composing the probe of the pitting corrosion diagnostic apparatus and the sample electrode 104 in electric contact with the stainless steel are included in the cabinet of the potential measuring sensor and compose the potential measuring senor 2010.

The reference electrode 102 and counter electrode 103 are arranged so that the leading edges thereof enter the cabinet of the potential measuring sensor 2010 and the sample electrode 104 in electric contact with the stainless steel of the pitting corrosion diagnostic apparatus is arranged so as to make contact with the impeller 205 of the seawater pump 200.

The cabinet of the potential measuring sensor 2010 is installed in contact with the impeller 205 of the seawater pump 200 via a packing layer, so that if the cabinet internally holds a solution which is an electric conductor, the inter-triode potential current aforementioned can be measured.

The inter-triode current measured by the potential measuring sensor 2010 and a potential signal are transferred to the potentiostat 105 of the potentiometer shown in Fig. 3 by an outgoing cable or radio and the potentiostat 105 is connected to the operational device 106 and the power source 107.

The potential current of the potentiostat 105 is transferred to the operational device 106 of the potentiometer shown in Fig. 3.

The potential measuring sensor 2010 which is a probe including the container 101 holding the potential measuring solution, the reference electrode 102, the counter electrode 103, and the sample electrode 104 in the cabinet is installed on the impeller 205 of the seawater pump 200, and the inter-triode current is used for the potentiostat 105 and operational device 106, thereby the potential difference between the corrosion potential and the pitting potential for the stainless steel impeller 205 is measured and is compared with the measured data which is premeasured and preserved in the measured data storage device 106a of the operational device 106, thus the pitting depth generated in the impeller 205 is calculated by the operational device 106 and a diagnosis of predicting the pitting depth progress can be made.

And, although the explanation is omitted due to duplication, the potential difference between the corrosion potential and the pitting potential which are measured for the impeller 205 of the stainless steel to be measured by calculation of the operational device 106 installed in the seawater pump pitting corrosion diagnostic apparatus using the stainless steel of this embodiment as a structural member is compared with the mutual relation between the potential difference between the corrosion-proof potential and the pitting potential of the premeasured data which are preserved in the measured data storage device 106a which is installed in the operational device 106, the pitting depth, and the measured data of the elapsed time required for reaching the pitting depth, and the pitting depth after the predetermined elapsed time generated in the impeller 205 is calculated by the operational device 106, thus the pitting depth progress can be predicted.

Further, when using the seawater pump 200 in seawater, when the seawater pump 200 is stopped in operation, the cell including the reference electrode 102 and the counter electrode 103 is installed in contact with the main member to be measured of the seawater pump 200, and the sample electrode 104 is installed in the state that the electrode thereof is in contact with the metallic portion of the seawater pump 200 which is electrically conductive to the member, thus the anode polarization of the main member of the seawater pump 200 can be measured.

The potential measuring sensor 2010 having the aforementioned constitution is installed on the main member of the seawater pump 200 and the potential difference between the corrosion potential and the pitting potential is measured, thus a diagnosis of predicting the pitting depth progress generated in the main members of the seawater pump 200 can be made.

Further, the potential difference between the corrosion potential and the pitting potential of the main members of the seawater pump 200 is measured by the potential measuring sensor 2010 through the operation period of the seawater pump 200, thus the pitting progress generated in the main members of the seawater pump 200 can be monitored.

The change with time in the corrosion potential and pitting potential of the main members of the seawater pump 200 is generally a shift of the pitting potential to the minus side and a shift of the corrosion potential to the plus side, so that the reduction with time of the pitting corrosion resistance can be predicted by monitoring the corrosion potential and pitting potential for the main members of the seawater pump 200.

According to this embodiment of the present invention, a seawater pump pitting corrosion diagnostic method using the stainless steel capable of diagnosing the pitting progress generated in the stainless steel to be measured and obtaining highly reliable maintenance information as a structural member and a seawater pump pitting corrosion diagnostic apparatus using the stainless steel as a structural member can be realized.

[Embodiment 4]

Next, a seawater pump pitting corrosion diagnostic apparatus using stainless steel which is another embodiment that the stainless steel pitting corrosion diagnostic art of the present invention is applied to the pitting corrosion diagnosis of the structural member of the seawater pump as a structural member and a seawater pump pitting corrosion diagnostic method using the stainless steel as a structural member will be explained.

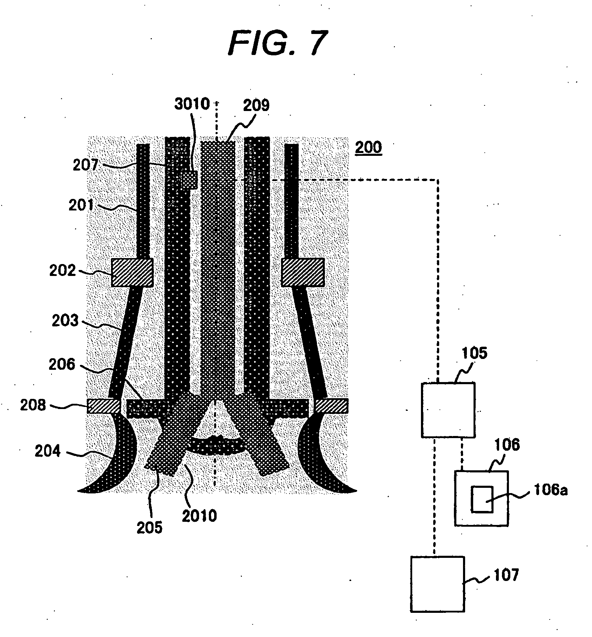

Fig. 7 is a schematic view showing the section of the seawater pump including the pitting corrosion diagnostic apparatus of the seawater pump using the stainless steel that is another embodiment similar to Fig. 6 of the present invention as a structural member.

The seawater pump pitting corrosion diagnostic apparatus of this embodiment has a main constitution common to that of the seawater pump pitting corrosion diagnostic apparatus of the preceding embodiment shown in Fig. 6, so that the constitution common to the two is omitted and only the different constitution will be explained below.

In Fig. 7, the guide blade 206 which is a main member of the seawater pump 200 of this embodiment is connected to the conductor 207 arranged so as to position on the inner peripheral side of the column pipe 201 and casing liner 203 and on the outer peripheral side of the rotary shaft 209 on the shaft center side of the seawater pump and the members of the guide blade 206 and conductor 207 are manufactured with stainless steel and the two are kept in the electrical contact state.

And, a potential measuring sensor 3010 which is a probe is installed in contact with the inner peripheral surface of the conductor 207, thus information on the pitting potential of the guide blade 206 which is a main member of the seawater pump 200 can be obtained.

The seawater pump pitting corrosion diagnostic apparatus of this embodiment installs the potential measuring sensor 3010 as a probe in place of the potential measuring sensor 2010 of the embodiment shown in Fig. 6 on the conductor 207 electrically connected to the guide blade 206 to be measured, though the inter-triode current is measured, thus the anode polarization behavior of the concerned member can be diagnosed, and the corrosion potential and pitting potential for the main members of the seawater pump 200 are measured, thus the corrosion resistance can be evaluated.

Here, the potential measuring sensor 3010 installed on the member of the conductor 207 electrically connected to the guide blade 206 which is a main member of the seawater pump 200 of this embodiment is composed of the following devices similarly to the potential measuring sensor 2010 and just corresponds to the potentiometer shown in Fig. 3.

The correspondence relation between the potential measuring sensor 3010 which is a probe and the constitution of the pitting corrosion diagnostic apparatus shown in Fig. 3 will be explained. The stainless steel 1010 of the potential measuring instrument shown in Fig. 3 corresponds to the member of the impeller 205 which is a main member of the seawater pump 200 shown in Fig. 7 and the container 101 holding a potential measuring solution of the pitting corrosion diagnostic apparatus corresponds to the cabinet of the potential measuring sensor 3010.

The reference electrode 102 and counter electrode 103 composing the probe of the pitting corrosion diagnostic apparatus and the sample electrode 104 in electric contact with the stainless steel are included in the cabinet of the potential measuring sensor and compose the potential measuring senor 3010.

The reference electrode 102 and counter electrode 103 are arranged so that the leading edges thereof enter the cabinet of the potential measuring sensor 3010 and the sample electrode 104 in electric contact with the stainless steel of the pitting corrosion diagnostic apparatus is arranged so as to make contact with the metallic conductor 207 electrically connected to the guide blade 206 of the seawater pump 200.

The cabinet of the potential measuring sensor 3010 is installed in contact with the metallic conductor 207 of the seawater pump 200 via a packing layer, so that if the cabinet internally holds a solution which is an electric conductor, the inter-triode potential current aforementioned can be measured.

The inter-triode current measured by the potential measuring sensor 3010 and a potential signal are transferred to the potentiostat 105 of the potentiometer shown in Fig. 3 by an outgoing cable or radio and the potentiostat 105 is connected to the operational device 106 and the power source 107.

The potential current of the potentiostat 105 is transferred to the operational device 106 of the potentiometer shown in Fig. 3.

The potential measuring sensor 3010 which is a probe including the container 101 holding the potential measuring solution, the reference electrode 102, the counter electrode 103, and the sample electrode 104 in the cabinet is installed on the stainless steel guide blade 206 which is a main member of the seawater pump 200 or the metal conductor 207 electrically connected to the guide blade 206, and the inter-triode current is used for the potentiostat 105 and operational device 106, thereby the potential difference between the corrosion potential and the pitting potential for the stainless steel guide blade 206 is measured and is compared with the measured data which is premeasured and preserved in the measured data storage device 106a of the operational device 106, thus the pitting depth generated in the guide blade 206 is calculated by the operational device 106 and a diagnosis of predicting the pitting depth progress can be made.

And, although the explanation is omitted due to duplication, the potential difference between the corrosion potential and the pitting potential which are measured for the guide blade 206 of the stainless steel to be measured or the metal conductor 207 electrically connected to the guide blade 206 by calculation of the operational device 106 installed in the seawater pump pitting corrosion diagnostic apparatus using the stainless steel of this embodiment as a structural member is compared with the mutual relation between the potential difference between the corrosion-proof potential and the pitting potential of the premeasured data which are preserved in the measured data storage device 106a which is installed in the operational device 106, the pitting depth, and the measured data of the elapsed time required for reaching the pitting depth, and the pitting depth after the predetermined elapsed time generated in the guide blade 206 is calculated by the operational device 106, thus the pitting depth progress can be predicted.

Further, the measurement diagnosis for the corrosion potential and pitting potential for the guide blade 206 is executed through the operation period of the seawater pump 200, thus the pitting progress generated in the guide blade 206 can be monitored.

The change with time in the corrosion potential and pitting potential of the main members of the seawater pump 200 is generally a shift of the pitting potential to the minus side and a shift of the corrosion potential to the plus side, so that the reduction with time of the pitting corrosion resistance can be predicted by monitoring the corrosion potential and pitting potential for the main members of the seawater pump 200.

According to this embodiment of the present invention, a seawater pump pitting corrosion diagnostic method using the stainless steel capable of diagnosing the pitting progress generated in the stainless steel to be measured and obtaining highly reliable maintenance information as a structural member and a seawater pump pitting corrosion diagnostic apparatus using the stainless steel as a structural member can be realized.

The present invention can be applied to a diagnostic method for pitting corrosion generated in a structural member using stainless steel, a pitting corrosion diagnostic apparatus for stainless steel, a diagnostic method for pitting corrosion of a seawater pump using stainless steel as a structural member, and a pitting corrosion diagnostic apparatus for the seawater pump using stainless steel as a structural member.

**Claims**

1. A stainless steel pitting corrosion diagnostic method comprising the steps of:

   measuring beforehand a potential difference between a corrosion-proof potential and a pitting potential, a pitting depth, and elapsed time required for reaching the pitting depth for stainless steel having a same material as the stainless steel (1010) to be measured and preserving a mutual relation thereof as measured data, and measuring the potential difference between the corrosion-proof potential and the pitting potential for the stainless steel to be measured, comparing the measured potential difference with said mutual relation between the potential difference between the corrosion-proof potential and the pitting potential of the measured data preserved, the pitting depth, and the elapsed time required for reaching the pitting depth, and calculating from the comparison the pitting depth generated after the elapsed time in the stainless steel to be measured, thereby predicting the pitting corrosion progress generated in the stainless steel.

**2.** A stainless steel pitting corrosion diagnostic apparatus comprising:

a potentiostat (105) structured so as to measure a corrosion potential at which a potential of stainless steel (1010) to be measured is set for a reference electrode (102), and a current between a counter electrode (103) at the potential and a sample electrode (104) is detected, and an anode current and a cathode current become equal to each other, and an apparent current becomes 0, and to measured a pitting potential at which the current increases rapidly at anode polarization,

a probe structured so as to include a container (101) for forming a water contact region on a surface of the stainless steel to be measured, the sample electrode (104) to be connected to an electrode terminal of the potentiostat for realizing electric conduction with the stainless steel and to be arranged in the container, the reference electrode (102) to be connected to the electrode terminal of the potentiostat and to be arranged in the container, and the counter electrode (103) to be connected to the electrode terminal of the potentiostat and to be arranged in the container,

a power source (107) for supplying power to the potentiostat, and

an operational device (106) including a storage device (106b) of measured data for measuring beforehand the potential difference between the corrosion-proof potential and the pitting potential, the pitting depth, and elapsed time required for reaching the pitting depth for stainless steel having at same material as the stainless steel (1010) to be measured and preserving a mutual relation thereof as measured data, for measuring the potential difference between a corrosion-proof potential and the pitting potential for the stainless steel to be measured by the probe and the potentiostat, comparing the measured potential difference with the mutual relation between the potential difference between the corrosion-proof potential and the pitting potential of the measured data preserved, the pitting depth, and the elapsed time required for reaching the pitting depth, and calculating from the comparison the pitting depth generated after the elapsed time in the stainless steel to be measured, thereby predicting pitting corrosion progress generated in the stainless steel.

**Patentansprüche**

**1.** Diagnoseverfahren für die Lochkorrosion von Edelstahl mit folgenden Schritten:

vorab Messen einer Potentialdifferenz zwischen einem korrosionssicheren Potential und einem Lochfraßpotential, einer Lochfraßtiefe und einer Zeitdauer, die zum Erreichen der Lochfraßtiefe benötigt wird, für Edelstahl mit gleichem Material wie bei dem zu messenden Edelstahl (1010) und Aufbewahren einer wechselweisen Beziehung davon als Messdaten, und

Messen der Potentialdifferenz zwischen dem korrosionssicheren Potential und dem Lochfraßpotential für den zu messenden Edelstahl, Vergleichen der gemessenen Potentialdifferenz mit der wechselweisen Beziehung zwischen der Potentialdifferenz zwischen dem korrosionssicheren Potential und dem Lochfraßpotential der aufbewahrten Messdaten, der Lochfraßtiefe und der Zeitdauer, die zum Erreichen der Lochfraßtiefe benötigt wird, und Berechnen der nach der Zeitdauer in dem zu messenden Edelstahl erzeugten Lochfraßtiefe aus dem Vergleich, um dadurch das Fortschreiten der in dem Edelstahl erzeugten Lochkorrosion vorherzusagen.

**2.** Diagnostische Vorrichtung für die Lochkorrosion von Edelstahl, aufweisend:

einen Potentiostaten (105), der zur Messung eines Korrosionspotentials eingerichtet ist, wobei für eine Referenzelektrode (102) ein Potential des zu messenden Edelstahls (1010) festgelegt wird und ein Strom zwischen einer Gegenelektrode (103) bei dem Potential und einer Probenelektrode (104) erfasst wird und ein Anodenstrom und ein Kathodenstrom einander gleich werden und ein aufscheinender Strom Null wird, und der außerdem zur Messung eines Lochfraßpotentials eingerichtet ist, bei dem der Strom unter Anodenpolarisation schnell ansteigt,

eine Sonde, die eingerichtet ist, einen Behälter (101) zur Ausbildung eines Wasserkontaktbereichs auf einer Fläche des zu messenden Edelstahls, die Probenelektrode (104) zur Anordnung in dem Behälter und zur Verbindung mit einem Elektrodenanschluss des Potentiostaten, um elektrische Leitfähigkeit mit dem Edelstahl herzustellen, die Referenzelektrode (102) zur Anordnung in dem Behälter und zur Verbindung mit dem Elektrodenanschluss des Potentiostaten und die Gegenelektrode (103) zur Anordnung in dem Behälter und zur Verbindung mit dem Elektrodenanschluss des Potentiostaten zu umfassen,

eine Energiequelle (107) zur Lieferung von Energie an den Potentiostaten, und

eine Betriebsvorrichtung (106) mit einer Speichervorrichtung (106b) für Messdaten, um vorab die Potentialdifferenz zwischen dem korrosionssicheren Potential und dem Lochfraßpotential, die Lochfraßtiefe und die Zeitdauer, die zum Erreichen der Lochfraßtiefe benötigt wird, für Edelstahl mit dem gleichen Material wie bei dem zu messenden Edelstahl (1010) zu messen und eine wechselweise Beziehung davon als Messdaten aufzubewahren, sowie um die Potentialdifferenz zwischen einem korrosionssicheren Potential und dem Lochfraßpotential für den zu messenden Edelstahl mittels der Sonde und des Potentiostaten zu messen, die gemessene Potentialdifferenz mit der wechselweisen Beziehung zwischen der Potentialdifferenz zwischen dem korrosionssicheren Potential und dem Lochfraßpotential der aufbewahrten Messdaten sowie der Lochfraßtiefe und der Zeitdauer, die zum Erreichen der Lochfraßtiefe benötigt wird, zu vergleichen und aus dem Vergleich die Lochfraßtiefe, die in dem zu messenden Edelstahl nach der Zeitdauer bewirkt wird, zu berechnen, um dadurch das Fortschreiten der in dem Edelstahl bewirkten Lochkorrosion vorherzusagen.

## Revendications

1.  Procédé de détection de piqûres de corrosion d'acier inoxydable comportant les étapes consistant à :

    mesurer au préalable une différence de potentiel entre un potentiel résistant à la corrosion et un potentiel de piqûre, une profondeur de piqûre, et une durée écoulée nécessaire pour atteindre la profondeur de piqûre dans le cas d'un acier inoxydable de même matériau que l'acier inoxydable (1010) à mesurer et conserver une relation mutuelle de ceux-ci en tant que données mesurées, et
    mesurer la différence de potentiel entre le potentiel résistant à la corrosion et le potentiel de piqûre de l'acier inoxydable à mesurer, comparer la différence de potentiel mesurée à ladite relation mutuelle entre la différence de potentiel entre le potentiel résistant à la corrosion et le potentiel de piqûre des données mesurées conservées, la profondeur de piqûre, et la durée écoulée requise pour atteindre la profondeur de piqûre, et calculer, à partir de la comparaison, la profondeur de piqûre générée après la durée écoulée dans l'acier inoxydable à mesurer, de manière à prévoir la progression des piqûres de corrosion générées dans l'acier inoxydable.

2.  Appareil de diagnostic de piqûres de corrosion pour acier inoxydable comportant :

    un potentiostat (105) structuré de manière à mesurer un potentiel de corrosion auquel un potentiel de l'acier inoxydable (1010) à mesurer est fixé pour une électrode de référence (102) et un courant entre une contre-électrode (103) au potentiel et une électrode d'échantillon (104) est détecté, et un courant d'anode et un courant de cathode deviennent égaux l'un à l'autre, et un courant apparent devient égal à zéro, et pour mesurer un potentiel de piqûre auquel le courant augmente rapidement au niveau d'une polarisation d'anode,
une sonde structurée de manière à inclure un conteneur (101) pour former une région de contact avec l'eau sur une surface de l'acier inoxydable à mesurer, l'électrode d'échantillon (104) étant destinée à être reliée à une borne d'électrode du potentiostat pour obtenir une conduction électrique avec l'acier inoxydable et à être disposée dans le conteneur, l'électrode de référence (102) étant destinée à être reliée à la borne d'électrode du potentiostat et à être disposée dans le conteneur, et l'électrode de compteur (103) étant destinée à être reliée à la borne d'électrode du potentiostat et à être disposée dans le conteneur,
une source d'alimentation (107) pour fournir de l'énergie au potentiostat, et
un dispositif opérationnel (106) comprenant un dispositif de stockage (106b) de données mesurées pour mesurer au préalable la différence de potentiel entre le potentiel résistant à la corrosion et le potentiel de piqûre, la profondeur de piqûre, et une durée écoulée requise pour atteindre la profondeur de piqûre pour un acier inoxydable de même matériau que l'acier inoxydable (1010) à mesurer et conserver une relation mutuelle de ceux-ci en tant que données mesurées, pour mesurer la différence de potentiel entre un potentiel résistant à la corrosion et le potentiel de piqûre pour l'acier inoxydable à mesurer par l'intermédiaire de la sonde et du potentiostat, comparer la différence de potentiel mesurée à la relation mutuelle entre la différence de potentiel entre le potentiel résistant à la corrosion et le potentiel de piqûre des données mesurées conservées, la profondeur de piqûre, et la durée écoulée requise pour atteindre la profondeur de piqûre, et calculer à partir de la comparaison la profondeur de piqûre générée après la durée écoulée dans l'acier inoxydable à mesurer, de manière à prévoir la progression des piqûres de corrosion générée dans l'acier inoxydable.

## FIG. 1

POTENTIAL DIFFERENCE
(PITTING POTENTIAL – CORROSION POTENTIAL ; mV)

## FIG. 2

POTENTIAL DIFFERENCE
(mV ; Epit–Ecorr)

## FIG. 3

# FIG. 4

## FIG. 5

EP 2 221 601 B1

FIG. 6

18

# FIG. 7

**EP 2 221 601 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006291724 A
- JP 2003329632 A
- JP HEI101998170469 B
- JP 5215707 A